# EUROPEAN PATENT SPECIFICATION

(11) **EP 4 308 662 B1**
(45) Date of publication and mention of the grant of the patent: **15.01.2025**
(21) Application number: 22707674.2
(22) Date of filing: 18.02.2022
(51) Int. Cl.: C09J 111/00, C08L 15/00, C08K 5/544, C08L 57/02, C08L 93/04, C08L 11/00

(54) **CHLOROPRENE RUBBER-BASED CONTACT ADHESIVE COMPOSITION**
KONTAKTKLEBSTOFFZUSAMMENSETZUNG AUF BASIS VON CHLOROPRENKAUTSCHUK
COMPOSITION ADHÉSIVE DE CONTACT À BASE DE CAOUTCHOUC CHLOROPRÈNE

(30) Priority: 17.03.2021 IN 202141011285
(43) Date of publication of application: 24.01.2024
(73) Proprietor: Henkel AG & Co. KGaA, 40589 Düsseldorf (DE)
(72) Inventor: TRIVEDI, Krunal, Vapi 396195 (IN); PATEL, Mihirkumar, Pune 411057 (IN); SHAH, Jayesh P, Pune 411001 (IN); GHOSH, Nippon, Mumbai 400706 (IN)
(86) International application number: PCT/EP2022/054028
(87) International publication number: WO 2022/194485

(56) References cited:
- US-A- 3 965 061
- US-B2- 10 647 893

## Description

### Technical Fields

The present invention relates to a contact adhesive composition based on chloroprene rubber, to a preparation method of the contact adhesive composition and to a method of bonding substrate by using the contact adhesive composition. In particular, the present invention relates to a contact adhesive composition comprising a fast-crystallizing chloroprene rubber and a slowly-crystallizing chloroprene rubber.

### Background

Chloroprene rubber-based contact adhesives have been extensively used in bonding wood substrates. Such adhesive exhibits an excellent initial adhesive strength due to fast crystallization and displays excellent adhesion properties to wood adherents. The adhesive is applied to both substrates using brushing technique. After the adhesive is applied, the coated substrates are allowed to dry at room temperature till the removal of residual traces of solvent. The solvent-based contact adhesives provide rapid green strength development, aggressive grab tack, good surface adhesion, and bond strength development.

For example, in furniture industry such as in India, chloroprene rubber-based solvent-based contact adhesive has been predominantly used to adhere a wide range of substrates, primarily plywood and laminate. However, in view of many typical market practices such as outdoor application, bonding at corners without tapes, a robust adhesive product is required to provide quick strength buildup and durability in harsh environment.

Efforts have been made to develop such chloroprene rubber-based contact adhesives.

For example, US 4485200 A discloses a carboxylated neoprene latex adhesive improved with respect to their metal adhesion, heat and water resistance and bonding range by the addition thereto of an epoxy resin, preferably an epoxy resin prepared by the reaction of para-aminophenol with epichlorohydrin.

US 5252668 A discloses a one-pack chloroprene adhesive having excellent adhesion and excellent heat resistance, particularly excellent heat aging resistance, which comprises a chloroprene rubber modified with an aminosilane, a petroleum resin as a tackifier resin and an organic solvent.

US 5753727 A discloses a chloroprene rubber adhesive composition containing a chloroprene rubber; a tackifier resin; a chlorinated polyolefin; a solvent; and a component which is selected from the group consisting of components (A) and (B) to improve the adhesive strength and heat resistance. The component (A) is combination of an epoxy resin and a curing agent, and the curing agent is selected from dicyandiamide, imidazole, imidazole derivative, onium compound, ketimine compound represented by the formula (I) or a ketimine derivative. The component (B) is a silane compound having at least two reactive groups, and the reactive group is selected from an epoxy group, a vinyl group, a hydroxy group, an acryloxy group, a methacryloxy group and alkoxy groups. US 2004/0254283 A1 discloses a solvent-containing composition based on polychloroprene, and solvent-containing zinc oxide dispersions which are stable in storage, that can be used in adhesive and sealant compositions. The compositions can be prepared by mixing the polychloroprene composition and zinc oxide dispersion and optionally adding conventional adhesive auxiliaries and/or additives and optionally adding an additional solvent. US3965061 discloses an adhesive composition containing a high crystallizing chloroprene polymer, a medium crystallizing chloroprene polymer, and a solvent, exhibiting an improved dead load hot strength.

However, there is still a need to develop a chloroprene rubber-based solvent-based contact adhesive which has an improved reliability even in harsh environment with an excellent balance with initial strength and other properties required as above.

### Summary of the invention

A first object of the invention is to provide a contact adhesive composition, comprising:
a first chloroprene rubber having a 100% increased Shore A hardness in no more than 2 hours when crystallizing at -10°C,
a second chloroprene rubber having a 100% increased Shore A hardness in more than 2 hours when crystallizing at -10°C,
a solvent,
optionally an adhesion promoter, and
optionally a tackifier resin,
wherein the weight ratio of the first chloroprene rubber to the second chloroprene rubber is no less than 1.6.

Other objects of the invention are to provide a cured product obtainable by the contact adhesive composition, a process for preparing a contact adhesive composition, a process for producing bonded substrates by using the contact adhesive composition and the use of the contact adhesive composition.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

Unless otherwise defined, all terms used in the disclosing the invention, including technical and scientific terms, have the meaning as commonly understood by one of the ordinary skill in the art to which this invention belongs to. By means of further guidance, term definitions are included to better appreciate the teaching of the present invention.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or process steps.

The recitation of numerical end points includes all numbers and fractions subsumed within the respective ranges, as well as the recited end points.

The disclosed contact adhesive composition comprises a first chloroprene rubber which crystallizes in a fast speed and exhibits a 100% increased Shore A hardness in no more than 2 hours when crystallizing at -10°C. The contact adhesive composition further comprises a second chloroprene rubber which crystallizes in a slower speed and exhibits a 100% increased Shore A hardness in more than 2 hours when crystallizing at -10°C. Surprising, the inventors have found that an improved reliable adhesion of the cured adhesive under harsh conditions can be achieved by selecting the weight ratio of the first (fast crystallizing) chloroprene rubber to the second (slowly crystallizing) chloroprene rubber.

According to the invention, the first chloroprene rubber can crystallize fast and exhibits a 100% increased Shore A hardness in no more than 2 hours, preferably no more than 1.5 hours, and more preferably no more than 1 hour when crystallizing at -10°C.

The measurement of the Shore A hardness herein is well known and can be tested with an instrument called Durometer which utilizes an indenter loaded by a calibrated spring. The measured hardness is determined by the penetration depth of the indenter under the load.

According to the invention, chloroprene rubber (CR) is understood to include not only the homopolymer of poly(2-chloro-1,3-butadiene) but also copolymers containing chloroprene units which are produced using ethylenically unsaturated comonomers. The comonomers include but not limited to acrylic acid esters such as methyl acrylate, butyl acrylate, and 2-ethylhexyl acrylate; methacrylic acid esters such as methyl methacrylate, butyl methacrylate, and 2-ethylhexyl methacrylate; 2,3-dichloro-1,3-butadiene, 1-chloro-1,3-butadiene, butadiene, isoprene, ethylene, styrene, acrylonitrile, and the derivatives thereof.

In one embodiment, the first chloroprene rubber comprises homopolymer and/or copolymer. In another embodiment, the first chloroprene rubber essentially comprises homopolymer, preferably comprises at least 97%, and more preferably at least 99% by weight of homopolymer based on the weight of the first chloroprene. In one preferred embodiment, the first chloroprene rubber consists of homopolymer. If the amount of the copolymer of chloroprene and ethylenically unsaturated comonomer can be limited to no more than 3% by weight of the contact adhesive composition, an improved adhesion after aging will be achieved. Examples of such copolymer include those sold under the trade name of Skyprene 510 and 510L from Tosoh.

The first chloroprene rubber can be used singly or in mixture. The first chloroprene rubber can be prepared according to methods well known in the art or obtained from commercial source.

The production of the first chloroprene rubber has been known for a long time and it is generally carried out by emulsion polymerization in an alkaline aqueous medium.

Examples of the first chloroprene rubber can be those sold under the trade name of Baypren 300 series from Arlanxeo.

According to the invention, the second chloroprene rubber can crystallize in a speed significantly slower than that of the first chloroprene rubber. The second chloroprene rubber exhibits a 100% increased Shore A hardness in more than 2 hours, preferably more than 5 hours, and more preferably more than 10 hours when crystallizing at -10°C.

In one embodiment, the second chloroprene rubber comprises homopolymer and/or copolymer. In one embodiment, the second chloroprene rubber essentially comprises homopolymer, preferably comprises at least 97%, and more preferably at least 99% by weight of homopolymer based on the weight of the second chloroprene. In one preferred embodiment, the second chloroprene rubber consists of homopolymer. If the amount of the copolymer of chloroprene and ethylenically unsaturated comonomer can be limited to the above range, an improved adhesion after aging will be achieved. Examples of such copolymer include those sold under the trade name of Skyprene 570 and 580 from Tosoh.

The second chloroprene rubber can be used singly or in mixture. The second chloroprene rubber can be prepared according to methods well known in the art or obtained from commercial source.

The production of the second chloroprene rubber has been known for a long time and it is generally carried out by emulsion polymerization in an alkaline aqueous medium.

Examples of the second chloroprene rubber can be those sold under the trade name of Baypren 200 series from Arlanxeo.

According to the present invention, the weight ratio of the first chloroprene rubber to the second chloroprene rubber is no less than 1.6, preferably no less than 2.0, more preferably no less than 3.0, and in particular no less than 3.5. When the weight ratio is in the above range, a better adhesion after aging will be achieved.

In one embodiment, the total amount of the first and second chloroprene rubbers ranges from 5% to 30% by weight, preferably from 8% to 20% by weight, and more preferably from 10% to 15% by weight based on the total weight of the contact adhesive composition.

In one preferred embodiment, the first chloroprene rubber is present in an amount of 2% to 20% by weight, preferably from 5% to 15% by weight based on the total weight of the contact adhesive composition.

In another preferred embodiment, the second chloroprene rubber is present in an amount of 1% to 10% by weight, preferably from 2% to 8% by weight based on the total weight of the contact adhesive composition.

The solvent of the present invention refers to one or more common organic solvents and may be selected from the group consisting of aromatic solvents, ketone compounds, aliphatic solvents, alicyclic solvents, ester solvents, chlorinated hydrocarbon compounds and combination thereof.

In some embodiments of the present invention, the solvent is selected from benzene, toluene, xylene, acetone, methyl ethyl ketone, hexane, cyclohexane, methyl cyclohexane, ethyl acetate, butyl acetate, dichloromethane, and any combination thereof. In some preferred embodiments, the solvent does not comprise benzene, toluene and xylene for environmental and safety concerns. In one preferred embodiment, the solvent is cyclohexane, ethyl acetate or the combination.

In some embodiments of the present invention, the amount of the solvent is from 50% to 85%, and preferably from 60% to 80% by weight based on the total weight of the contact adhesion composition.

The contact adhesive composition may comprise an adhesion promoter. The adhesion promoter is selected from epoxysilane, aminosilane, unsaturated silane, chlorinated polyolefin and combination thereof.

Examples of the epoxysilane are glycidoxypropyl trimethoxysilane, glycidoxypropyl triethoxysilane, beta-(3,4-epoxycyclohexyl)-ethyl trimethoxysilane, 3-methacryloxypropyl trimethoxysilane, 3-methacryloxypropyl triethoxysilane.

Examples of the aminosilane are gamma-aminopropyl trimethoxysilane, gamma-aminopropyl triethoxysilane, gamma-aminopropyl triisopropoxysilane, gamma-aminopropylmethyl dimethoxysilane, gamma-aminopropylmethyl diethoxysilane, gamma-(2-aminoethyl)aminopropyl trimethoxysilane, gamma-(6-aminohexyl)aminopropyl trimethoxysilane, N-(2-aminoethyl)-3-aminopropylmethyl dimethoxysilane, N-2-(aminoethyl)-3-aminopropyl trimethoxysilane, 3-aminopropyl triethoxysilane, 4-amino-3,3-dimethylbutyl trimethoxysilane, 4-amino-3,3-dimethylbutyl dimethoxymethylsilane, 3-(N-ethylamino)-2-methylpropyl trimethoxysilane, N-ethyl-3-amino-2-methylpropyl trimethoxysilane, N-ethyl-3-amino-2-methylpropyl diethoxymethylsilane, N-ethyl-3-amino-2-methylpropyl triethoxysilane, N-ethyl-3-amino-2-methylpropylmethyl dimethoxysilane, N-butyl-3-amino-2-methylpropyl trimethoxysilane, N-phenyl-gamma -aminopropyl trimethoxysilane, N-benzyl-gamma -aminopropyl trimethoxysilane.

The manufacturers and product names of some aminosilanes useful in the present invention include: CZ6020, Z6011, XI-6100, and X16150 manufactured by Dow Corning; Silquest A1100, A1101, A1102, A1108, A1110, A1120, A1126, A1130, A1387, Y9632, A1637, A-2120 and A2639, and CoatOSil 2810 manufactured by Momentive; ED117 manufactured by Wacker; Dynasylan AMMO, AMEO-P, AMEO-T, DAMO, TRIAMO, 1122, 1126, 1146, 1189, 1204, 1411 and 1505 all manufactured by Degussa; and KBE-602, KBE-603 and KBE-903 manufactured by Shin-Etsu.

Examples of the unsaturated silane are vinyltrimethoxysilane, vinyltriethoxysilane, vinyltris(2-methoxyethoxy)silane.

Examples of chlorinated polyolefin are grafted or ungrafted chlorinated polyolefins such as, without limitation, chlorinated polypropylene, chlorinated polybutene, chlorinated polyethylene. Examples of commercially available products include: Superchlon CR-10, CR-20 (Nippon Paper Co., Ltd.), Pergut S-5, Pergut S-10, Pergut S-20, Pergut S-40, Pergut S-90, Pergut S-130, Pergut S-170 (Covestro), Alloprene R10, R20, R40 (manufactured by ICI UK), and the like.

The adhesion promoter is contained in an amount of 0 to 10% by weight, preferably from 0.5 to 8% by weight, and more preferably from 1.0 to 5 by weight, based on the total weight of the contact adhesive composition.

Preferably, the adhesion promoter is selected from aminosilane, chlorinated polyolefin and combination thereof.

If present, the aminosilane is contained in an amount of 0.1 to 5% by weight, preferably from 0.5 to 3% by weight, and more preferably from 1.0 to 2.5 by weight, based on the total weight of the contact adhesive composition. The presence of the aminosilane in the above range may contribute to a further improvement of the adhesion of the cured adhesive even after aging.

If present, the chlorinated polyolefin is contained in an amount of an amount of 0.1 to 5% by weight, preferably from 0.5 to 3% by weight, and more preferably from 1.0 to 2.5 by weight, based on the total weight of the contact adhesive composition.

The tackifier resin of the present invention refers to any common tackifier resin and includes but not limited to aliphatic petroleum resin, cyclic petroleum resin, aromatic petroleum resin, gum resin, rosin ester, synthetic terpene resin, natural terpene resin and any combination thereof.

Examples of commercially available tackifiers are, for example, Tamanol 803L from Arakawa Chemical; C100R, C100W, H130R, and H130W from Eastman; H5-1000 and H5-1001 from Henghe China; SU90, SU100, SU120 and SU130 from Kolon Industries; I-Marv P90, I-Marv P100, and I-Marv P120 from Idemitsu; Regalite R1100, Regalite R1120, and Regalite S1100 from Eastman; Komotac 146 from Guangdong Komo Co., Ltd. and Hikotack P120 from Kolon Industries.

In some embodiments of the present invention, the amount of the tackifier resin is from 0% to 20%, preferably from 4% to 15%, and preferably from 5% to 10% by weight based on the total weight of the contact adhesive composition.

The contact adhesive composition according to the invention can also contain one or more additives commonly used for adhesives. Such additives can include, but are not limited to plasticizers, pigments, fillers, catalysts, levelling agents, thickeners, stabilizers, light stabilizers, antioxidants, defoamers, UV absorbers and combinations thereof. The amount of the additives may range from 0 to 20% by weight, and preferably 0.5 to 15% by weight based on the total weight of the contact adhesive composition.

In one embodiment, the invention relates to a contact adhesive composition comprising, based on the total weight of the contact adhesive composition:
from 2% to 20% by weight, preferably from 5% to 15% by weight of a first chloroprene rubber having a 100% increased Shore A hardness in no more than 2 hours when crystallizing at -10°C,
from 1% to 10% by weight, preferably from 2% to 8% by weight of a second chloroprene rubber having a 100% increased Shore A hardness in more than 2 hours when crystallizing at -10°C,
from 50% to 85%, and preferably from 60% to 80% by weight a solvent,
from 0 to 10% by weight, preferably from 0.5 to 8% by weight of an adhesion promoter,
from 0 to 20%, preferably from 4% to 15% by weight a tackifier resin, and
from 0 to 20% by weight, and preferably 0.5 to 15% by weight of an additive,
wherein the weight ratio of the first chloroprene rubber to the second chloroprene rubber is no less than 1.6.

In another embodiment, the invention relates to a contact adhesive composition comprising, based on the total weight of the contact adhesive composition:
from 2% to 20% by weight, preferably from 5% to 15% by weight of a first chloroprene rubber having a 100% increased Shore A hardness in no more than 2 hours when crystallizing at -10°C,
from 1% to 10% by weight, preferably from 2% to 8% by weight of a second chloroprene rubber having a 100% increased Shore A hardness in more than 2 hours when crystallizing at -10°C,
from 50% to 85%, and preferably from 60% to 80% by weight a solvent,
from 0.1% to 5% by weight, preferably from 0.5% to 3%, and more preferably from 1.0% to 2.5% by weight of an aminosilane,
from 0 to 20%, preferably from 4% to 15% by weight a tackifier resin, and
from 0 to 20% by weight, and preferably 0.5 to 15% by weight of an additive,
wherein the weight ratio of the first chloroprene rubber to the second chloroprene rubber is no less than 1.6.

In yet another embodiment, the invention relates to a contact adhesive composition comprising, based on the total weight of the contact adhesive composition:
from 2% to 20% by weight, preferably from 5% to 15% by weight of a first chloroprene rubber having a 100% increased Shore A hardness in no more than 2 hours when crystallizing at -10°C,
from 1% to 10% by weight, preferably from 2% to 8% by weight of a second chloroprene rubber having a 100% increased Shore A hardness in more than 2 hours when crystallizing at -10°C,
from 50% to 85%, and preferably from 60% to 80% by weight a solvent,
from 0.1 to 5% by weight, preferably from 0.5 to 3% and more preferably from by weight of an aminosilane,
from 0.1 to 5% by weight, preferably from 0.5 to 3% by weight of a chlorinated polyolefin,
from 4% to 15%, and preferably from 5% to 10% by weight a tackifier resin, and
from 0 to 20% by weight, and preferably 0.5 to 15% by weight of an additive,
wherein the weight ratio of the first chloroprene rubber to the second chloroprene rubber is no less than 1.6.

The invention also relates to a process for producing the conduct adhesive composition according to the invention which comprises the following steps:
(1) dissolving a chloroprene rubber in a solvent to obtain a homogenous mixture;
(2) optionally admixing an adhesion promoter, a tackifier resin and an additive in the mixture; and
(3) obtaining the contact adhesive composition.

The process steps can be conducted under ambient conditions and thus the preparation of the conduct adhesive composition can be easily achieved and no special equipment for high temperature application is required.

The invention also relates to the use of the contact adhesive composition according to the invention as an adhesive or sealant.

The invention also relates to a process for producing bonded substrates which comprises applying at least one contact adhesive composition according to the invention to at least one surface of at least one substrate and then bonding the coated substrate to at least one additional, optionally coated substrate, as well as to bonded substrates obtained by this process.

The application of the adhesive compositions can be carried out in the known manner, for example by brushing, pouring, knife-coating, spraying, rolling or dip-coating. The drying of the adhesive film can be carried out at room temperature or at an elevated temperature.

The contact adhesive composition according to the invention can be used as adhesives, for example for bonding any desired substrates of identical or different types, such as wood, paper, plastics, textiles, leather, rubber or inorganic materials, such as ceramics, stoneware, glass fibres or cement.

The contact adhesives based on polychloroprene are predominantly solvent-containing adhesives which are applied to both parts to be bonded and allowed to dry. By then joining both parts under pressure a bond having high strength at room temperature and even after aging under harsh conditions is obtained.

It is understandable that adhesives allowing such an uncomplicated and rapidly performed adhesion process are of extreme commercial importance. The chloroprene rubber contact adhesives are therefore used in all fields, e.g. in the shoe or furniture industry, where articles are to be produced in small numbers or where articles are produced in large numbers in various shapes or sizes according to individual requirements. Similarly, one main field of use is for example the building industry or shipyards, where bonding processes have to be carried out on site without the use of complicated machines, i.e. in the form of assembly work such as interior fittings or the laying of floor coverings.

The invention will be illustrated in more detail by way of the following examples which are not to be understood as limiting the concept of the invention.

### Examples

The following materials were used in the examples.

Ethyl acetate and cyclohexane are solvents commercially available from Sigma-Aldrich.

Bayprene 320-2 is a fast-crystallizing chloroprene rubber, having a 100% increased Shore A hardness in no more than 1 hour when crystallizing at -10°C, obtained from Arlanxeo.

Bayprene 243-2 is a slowly-crystallizing chloroprene rubber, having a 100% increased Shore A hardness in more than 10 hours when crystallizing at -10°C, obtained from Arlanxeo.

Skyprene 570 is a slowly-crystallizing, carboxylated chloroprene rubber, having a 100% increased Shore A hardness in more than 2 hours when crystallizing at -10°C, obtained from Tosoh.

Pergut s-20 is a chlorinated polyisoprene rubber obtained from Covestro.

Komotac 146 is a rosin ester obtained from Guangdong Komo.

Hikotack P120 is an unsaturated aromatic hydrocarbon resin obtained from Kolon Industries.

Tamanol 803L is a terpene phenolic resin obtained from Arakawa Chemical.

Tamanol 586 is an alkylphenolic resin obtained from Arakawa Chemical.

Silquest A1110 is a primary amino silane obtained from Momentive.

### Preparation of the contact adhesive compositions

The contact adhesive compositions according to inventive examples (Ex.1 to Ex.7) and not according to the invention (CE.1 to CE.3) were prepared according to the formulations in Table 1.

**Table 1. Formulations of contact adhesive compositions (% by weight)**

| **Component** | **CE.1** | **CE.2** | **CE.3** | **Ex.1** | **Ex.2** | **Ex.3** | **Ex.4** | **Ex.5** | **Ex.6** | **Ex.7** |
|---|---|---|---|---|---|---|---|---|---|---|
| Ethyl acetate | 51.57 | 51.04 | 51.57 | 51.57 | 50.55 | 50.55 | 50.55 | 50.55 | 50.55 | 50.05 |
| Cyclohexane | 26.57 | 26.10 | 26.57 | 26.57 | 27.18 | 26.58 | 26.08 | 25.58 | 25.08 | 25.08 |
| Bayprene 320-2 | 7.74 | 7.74 | 7.74 | 10.22 | 10.13 | 10.23 | 10.23 | 10.23 | 10.23 | 10.23 |
| Bayprene 243-2 | 5.03 | 5.03 | 3.91 | 2.63 | 2.63 | 2.63 | 2.63 | 2.63 | 2.63 | 2.63 |
| Skyprene 570 | - | - | 3.00 | - | - | - | - | - | - | - |
| Pergut s-20 | 2.00 | 2.00 | 2.00 | 2.00 | 2.00 | 2.00 | 2.00 | 2.00 | 2.00 | 2.00 |
| Komotac 146 | 1.80 | 1.80 | - | 1.80 | 1.80 | 1.80 | 1.80 | 1.80 | 1.80 | 1.80 |
| Hikotack P120 | 1.90 | 1.90 | 1.90 | 1.90 | 1.90 | 1.90 | 1.90 | 1.90 | 1.90 | 1.90 |
| Tamanol 803L | 1.90 | 1.90 | 1.90 | 1.90 | 1.90 | 1.90 | 1.90 | 1.90 | 1.90 | 1.90 |
| Tamanol 586 | 1.49 | 1.49 | 1.41 | 1.41 | 1.41 | 1.41 | 1.41 | 1.41 | 1.41 | 1.41 |
| Silquest A1110 | - | 1.00 | - | - | 0.50 | 1.00 | 1.50 | 2.00 | 2.50 | 3.00 |

In a glass vessel with stirrer, ethyl acetate and cyclohexane were charged in sequential manner. Then Bayprene 320-2, Bayprene 243-2 and Skyprene 570 (if present) were charged under agitating, and mixed for 90 minutes. Pergut s-20, Komotac 146 (if present) and Hikotack P120 were charged under agitating afterwards and mixed for 20 minutes. In addition, Tamanol 803L, Tamanol 586 and Silquest A-1110 (if present) were charged under agitating and mixed for 250 minutes to obtain a homogeneous adhesive composition.

### Testing method and results

The examples of adhesive compositions were evaluated for tensile shear bond strength of the cured adhesive on specimen assemblies made of two layers of plywood. All the lap shear specimens had dimensions of 100×25 mm and the overlap bond area was 25×12.5 mm². The assemblies were prepared by applying the adhesion composition to one surface of a plywood, making the other plywood therewith, and completing the joint immediately. The assemblies were then stored at ambient condition (25°C and 55% relative humidity (RH)) for a drying time (open time) interval of 4 min, 12 min or 20 min to allow for cure. Afterwards, the bonded assemblies were aged in a humidity chamber at 40°C with 80% RH for 3 days. The tensile lap shear strength under different drying time intervals was then measured at room temperature using an Instron tensile tester with a crosshead speed of 50 mm/min.

If the tensile lap-shear strength after aging is larger than 1000 N/in², the performance of the adhesive was evaluated as "Very good". If the tensile lap-shear strength after aging is between 800 to 1000 N/in², the performance of the adhesive was evaluated as "Good". If the tensile lap-shear strength after aging is between 600 to 800 N/in², the performance of the adhesive was evaluated as "fair". If the tensile lap-shear strength after aging is lower than 600 N/in², the performance of the adhesive was evaluated as "poor". The test results are shown in Table 2.

**Table 2. Test results of tensile lap-shear strength after aging (N/in²)**

| **Drying time** | **CE.1** | **CE.2** | **CE.3** | **Ex.1** | **Ex.2** | **Ex.3** | **Ex.4** | **Ex.5** | **Ex.6** | **Ex.7** |
|---|---|---|---|---|---|---|---|---|---|---|
| 4 min | Good | Fair | Poor | Fair | Good | Very good | Very good | Very good | Very good | Good |
| 12 min | Poor | Fair | Fair | Good | Good | Very good | Very good | Very good | Good | Very good |
| 20 min | Poor | Fair | Poor | Good | Good | Very good | Very good | Very good | Very good | Good |

As can be seen in Table 2, all inventive examples according to the present invention exhibited "Good" or "Very good" level of tensile lap-shear strength after aging under all drying time intervals. However, the Comparative Example 1 exhibited a poorer tensile lap-shear strength after aging after being dried for 12 min or 20 min. The Comparative Example 2 exhibited "Fair" tensile lap-shear strength after aging under the condition of all drying time intervals. In addition, the Comparative Example 3 exhibited "Poor" or "Fair" tensile lap-shear strength after aging under the condition of all drying time intervals.

## Claims

1. A contact adhesive composition, comprising
a first chloroprene rubber having a 100% increased Shore A hardness in no more than 2 hours when crystallizing at -10°C,
a second chloroprene rubber having a 100% increased Shore A hardness in more than 2 hours when crystallizing at -10°C,
a solvent,
optionally an adhesion promoter,
optionally a tackifier resin,
wherein the weight ratio of the first chloroprene rubber to the second chloroprene rubber is no less than 1.6.

2. The contact adhesive composition according to claim 1, wherein the first chloroprene rubber having a 100% increased Shore A hardness in no more than 1.5 hours, and preferably no more than 1 hour when crystallizing at -10°C.

3. The contact adhesive composition according to claim 1 or 2, wherein the second chloroprene rubber having a 100% increased Shore A hardness in more than 5 hours, and preferably more than 10 hours when crystallizing at -10°C.

4. The contact adhesive composition according to any of the preceding claims, wherein the first chloroprene rubber is a chloroprene homopolymer or copolymer.

5. The contact adhesive composition according to any of the preceding claims, wherein the second chloroprene rubber is a chloroprene homopolymer or copolymer.

6. The contact adhesive composition according to any of the preceding claims, wherein the total amount of the first and second chloroprene rubbers is present in an amount of 5% to 30% by weight, preferably from 8% to 20% by weight, and more preferably from 10% to 15% by weight, based on the total amount of the adhesive composition.

7. The contact adhesive composition according to any of the preceding claims, wherein the solvent is selected from the group consisting of toluene, xylene, acetone, methyl ethyl ketone, hexane, cyclohexane, methyl cyclohexane, ethyl acetate, butyl acetate, dichloromethane, and combination thereof.

8. The contact adhesive composition according to any of the preceding claims, wherein the adhesion promoter is selected from epoxysilane, aminosilane, unsaturated silane, chlorinated polyolefin, and combination thereof, and more preferably selected from aminosilane, chlorinated polyolefin and combination thereof.

9. The contact adhesive composition according to claim 1, comprising an aminosilane, preferably an aminoalkoxysilane, more preferably selected from gamma-aminopropyltrimethoxysilane, gamma-aminopropyltriethoxysilane, gamma-aminopropyltriisopropoxysilane, gamma-aminopropylmethyldimethoxysilane, gamma-aminopropylmethyldiethoxysilane, gamma-(2-aminoethyl)aminopropyltrimethoxysilane, gamma-(6-aminohexyl)aminopropyltrimethoxysilane, N-(2-aminoethyl)-3-aminopropylmethyldimethoxysilane, N-2-(aminoethyl)-3-aminopropyltrimethoxysilane, 3-aminopropyltriethoxysilane, 4-amino-3,3-dimethylbutyltrimethoxysilane, 4-amino-3,3-dimethylbutyldimethoxymethylsilane, 3-(N-ethylamino)-2-methylpropyltrimethoxysilane, N-ethyl-3-amino-2-methylpropyltrimethoxysilane, N-ethyl-3-amino-2-methylpropyldiethoxymethylsilane, N-ethyl-3-amino-2-methylpropyltriethoxysilane, N-ethyl-3-amino-2-methylpropylmethyldimethoxysilane, N-butyl-3-amino-2-methylpropyltrimethoxysilane, N-phenyl-gamma-aminopropyltrimethoxysilane, N-benzyl-gamma-aminopropyltrimethoxysilane.

10. The contact adhesive composition according to claim 9, wherein the aminosilane is present in an amount of 0.1 to 5% by weight, preferably from 0.5 to 3% by weight, and more preferably from 1.0 to 2.5 by weight, based on the total weight of the contact adhesive composition.

11. The contact adhesive composition according to any of the preceding claims, wherein the tackifier resin selected from aliphatic petroleum resin, cyclic petroleum resin, aromatic petroleum resin, gum resin, rosin ester, synthetic terpene resin, natural terpene resin and combination thereof.

12. The contact adhesive composition according to any of the preceding claims, wherein the weight ratio of the first chloroprene rubber to the second chloroprene rubber is no less than 2.0, preferably no less than 3.0 and more preferably no less than 3.5.

13. A process for preparing a contact adhesive composition according to any of claims 1 to 12, comprising the steps:
(1) dissolving a chloroprene rubber in a solvent to obtain a homogenous mixture;
(2) optionally admixing an adhesion promoter, a tackifier resin and an additive in the mixture; and
(3) obtaining the contact adhesive composition,
wherein the steps are preferably conducted under ambient conditions.

14. A process for producing bonded substrates comprising applying at least one composition according to any of claims 1 to 12 to at least one surface of at least one substrate and subsequently bonding the applied substrate to at least one additional substrate.

15. Use of the contact adhesive composition according to any of claims 1 to 12 in the manufacturing of shoes or furniture.

## Patentansprüche

1. Kontaktklebstoffzusammensetzung, umfassend
einen ersten Chloroprenkautschuk, der eine 100 % gesteigerte Shore-Härte A in nicht mehr als 2 Stunden aufweist, wenn er bei -10 °C kristallisiert,
einen zweiten Chloroprenkautschuk, der eine 100 % gesteigerte Shore-Härte A in mehr als 2 Stunden aufweist, wenn er bei -10 °C kristallisiert,
ein Lösungsmittel,
optional einen Haftvermittler,
optional ein Klebrigmacherharz,
wobei das Gewichtsverhältnis des ersten Chloroprenkautschuks zu dem zweiten Chloroprenkautschuk nicht weniger als 1,6 beträgt.

2. Kontaktklebstoffzusammensetzung nach Anspruch 1, wobei der erste Chloroprenkautschuk eine 100 % gesteigerte Shore-Härte A in nicht mehr als 1,5 Stunden, und vorzugsweise nicht mehr als 1 Stunde, aufweist, wenn er bei -10 °C kristallisiert.

3. Kontaktklebstoffzusammensetzung nach Anspruch 1 oder 2, wobei der zweite Chloroprenkautschuk eine 100 % gesteigerte Shore-Härte A in mehr als 5 Stunden, und vorzugsweise mehr als 10 Stunden, aufweist, wenn er bei -10 °C kristallisiert.

4. Kontaktklebstoffzusammensetzung nach einem der vorstehenden Ansprüche, wobei der erste Chloroprenkautschuk ein Chloroprenhomopolymer oder -copolymer ist.

5. Kontaktklebstoffzusammensetzung nach einem der vorstehenden Ansprüche, wobei der zweite Chloroprenkautschuk ein Chloroprenhomopolymer oder -copolymer ist.

6. Kontaktklebstoffzusammensetzung nach einem der vorstehenden Ansprüche, wobei die Gesamtmenge des ersten und des zweiten Chloroprenkautschuks in einer Menge von 5 Gew.-% bis 30 Gew.-%, vorzugsweise von 8 Gew.-% bis 20 Gew.-%, und stärker bevorzugt von 10 Gew.-% bis 15 Gew.-%, bezogen auf die Gesamtmenge der Klebstoffzusammensetzung, vorhanden ist.

7. Kontaktklebstoffzusammensetzung nach einem der vorstehenden Ansprüche, wobei das Lösungsmittel aus der Gruppe ausgewählt ist, bestehend aus Toluol, Xylol, Aceton, Methylethylketon, Hexan, Cyclohexan, Methylcyclohexan, Ethylacetat, Butylacetat, Dichlormethan und einer Kombination davon.

8. Kontaktklebstoffzusammensetzung nach einem der vorstehenden Ansprüche, wobei der Haftvermittler aus Epoxysilan, Aminosilan, ungesättigtem Silan, chloriertem Polyolefin und einer Kombination davon ausgewählt ist und stärker bevorzugt aus Aminosilan, chloriertem Polyolefin und einer Kombination davon ausgewählt ist.

9. Kontaktklebstoffzusammensetzung nach Anspruch 1, umfassend ein Aminosilan, vorzugsweise ein Aminoalkoxysilan, stärker bevorzugt ausgewählt aus gamma-Aminopropyltrimethoxysilan, gamma-Aminopropyltriethoxysilan, gamma-Aminopropyltriisopropoxysilan, gamma-Aminopropylmethyldimethoxysilan, gamma-Aminopropylmethyldiethoxysilan, gamma-(2-Aminoethyl)aminopropyltrimethoxysilan, gamma-(6-Aminohexyl)aminopropyltrimethoxysilan, N-(2-Aminoethyl)-3-aminopropylmethyldimethoxysilan, N-2-(Aminoethyl)-3-aminopropyltrimethoxysilan, 3-Aminopropyltriethoxysilan, 4-Amino-3,3-dimethylbutyltrimethoxysilan, 4-Amino-3,3-dimethylbutyldimethoxymethylsilan, 3-(N-Ethylamino)-2-methylpropyltrimethoxysilan, N-Ethyl-3-amino-2-methylpropyltrimethoxysilan, N-Ethyl-3-amino-2-methylpropyldiethoxymethylsilan, N-Ethyl-3-amino-2-methylpropyltriethoxysilan, N-Ethyl-3-amino-2-methylpropylmethyldimethoxysilan, N-Butyl-3-amino-2-methylpropyltrimethoxysilan, N-Phenyl-gamma-aminopropyltrimethoxysilan, N-Benzyl-gamma-aminopropyltrimethoxysilan.

10. Kontaktklebstoffzusammensetzung gemäß Anspruch 9, wobei das Aminosilan in einer Menge von 0,1 bis 5 Gew.-%, vorzugsweise von 0,5 Gew.-% bis 3 Gew.-%, und stärker bevorzugt von 1,0 Gew.-% bis 2,5 Gew.-%, bezogen auf die Gesamtmenge der Kontaktklebstoffzusammensetzung, vorhanden ist.

11. Kontaktklebstoffzusammensetzung nach einem der vorstehenden Ansprüche, wobei das Klebrigmacherharz aus aliphatischem Petroleumharz, cyclischem Petroleumharz, aromatischem Petroleumharz, Gummiharz, Kolophoniumester, synthetischem Terpenharz, natürlichem Terpenharz und einer Kombination davon ausgewählt ist.

12. Kontaktklebstoffzusammensetzung nach einem der vorstehenden Ansprüche, wobei das Gewichtsverhältnis des ersten Chloroprenkautschuks zu dem zweiten Chloroprenkautschuk nicht weniger als 2,0, vorzugsweise nicht weniger als 3,0, und stärker bevorzugt nicht weniger als 3,5, beträgt.

13. Verfahren zum Herstellen einer Kontaktklebstoffzusammensetzung nach einem der Ansprüche 1 bis 12, umfassend die Schritte:
(1) Inlösunggehenlassen eines Chloroprenkautschuks in einem Lösungsmittel, um eine homogene Mischung zu erhalten;
(2) optional Beimischen eines Haftvermittlers, eines Klebrigmacherharzes und eines Additivs zu der Mischung; und
(3) Erhalten der Kontaktklebstoffzusammensetzung,
wobei die Schritte vorzugsweise unter Umgebungsbedingungen durchgeführt werden.

14. Verfahren zum Produzieren verklebter Substrate, umfassend ein Aufbringen mindestens einer Zusammensetzung nach einem der Ansprüche 1 bis 12 auf mindestens eine Oberfläche mindestens eines Substrats und anschließend ein Verkleben des aufgebrachten Substrats mit mindestens einem weiteren Substrat.

15. Verwendung der Kontaktklebstoffzusammensetzung nach einem der Ansprüche 1 bis 12 bei der Fertigung von Schuhen oder Möbeln.

## Revendications

1. Composition adhésive de contact, comprenant
un premier caoutchouc chloroprène ayant une dureté Shore A augmentée de 100 % en 2 heures au maximum lorsqu'il cristallise à -10 °C,
un second caoutchouc chloroprène ayant une dureté Shore A augmentée de 100 % en plus de 2 heures lorsqu'il cristallise à -10 °C,
un solvant,
facultativement un promoteur d'adhérence,
facultativement une résine tackifiante,
dans laquelle le rapport en poids du premier caoutchouc chloroprène au second caoutchouc chloroprène n'est pas inférieur à 1,6.

2. Composition adhésive de contact selon la revendication 1, dans laquelle le premier caoutchouc chloroprène a une dureté Shore A augmentée de 100 % en 1,5 heure au maximum, et de préférence en 1 heure au maximum lorsqu'il cristallise à -10 °C.

3. Composition adhésive de contact selon la revendication 1 ou 2, dans laquelle le second caoutchouc chloroprène a une dureté Shore A augmentée de 100 % en plus de 5 heures, et de préférence en plus de 10 heures lorsqu'il cristallise à -10 °C.

4. Composition adhésive de contact selon l'une quelconque des revendications précédentes, dans laquelle le premier caoutchouc chloroprène est un homopolymère ou copolymère de chloroprène.

5. Composition adhésive de contact selon l'une quelconque des revendications précédentes, dans laquelle le second caoutchouc chloroprène est un homopolymère ou copolymère de chloroprène.

6. Composition adhésive de contact selon l'une quelconque des revendications précédentes, dans laquelle la quantité totale des premier et second caoutchoucs chloroprènes est présente en une quantité de 5 % à 30 % en poids, de préférence de 8 % à 20 % en poids, et plus préférablement de 10 % à 15 % en poids, sur la base de la quantité totale de la composition adhésive.

7. Composition adhésive de contact selon l'une quelconque des revendications précédentes, dans laquelle le solvant est choisi dans le groupe constitué de toluène, xylène, acétone, méthyléthylcétone, hexane, cyclohexane, méthylcyclohexane, acétate d'éthyle, acétate de butyle, dichlorométhane, et combinaisons de ceux-ci.

8. Composition adhésive de contact selon l'une quelconque des revendications précédentes, dans laquelle le promoteur d'adhérence est choisi parmi époxysilane, aminosilane, silane insaturé, polyoléfine chlorée, et combinaison de ceux-ci, et plus préférablement choisi parmi aminosilane, polyoléfine chlorée et combinaison de ceux-ci.

9. Composition adhésive de contact selon la revendication 1, comprenant un aminosilane, de préférence un aminoalcoxysilane, plus préférablement choisi parmi gamma-aminopropyltriméthoxysilane, gamma-aminopropyltriéthoxysilane, gamma-aminopropyltriisopropoxysilane, gamma-aminopropylméthyldiméthoxysilane, gamma-aminopropylméthyldiéthoxysilane, gamma-(2-aminoéthyl)aminopropyltriméthoxysilane, gamma-(6-aminohexyl)aminopropyltriméthoxysilane, N-(2-aminoéthyl)-3-aminopropylméthyldiméthoxysilane, N-2-(aminoéthyl)-3-aminopropyltriméthoxysilane, 3-aminopropyltriéthoxysilane, 4-amino-3,3-diméthylbutyltriméthoxysilane, 4-amino-3,3-diméthylbutyldiméthoxyméthylsilane, 3-(N-éthylamino)-2-méthylpropyltriméthoxysilane, N-éthyl-3-amino-2-méthylpropyltriméthoxysilane, N-éthyl-3-amino-2-méthylpropyldiéthoxyméthylsilane, N-éthyl-3-amino-2-méthylpropyltriéthoxysilane, N-éthyl-3-amino-2-méthylpropylméthyldiméthoxysilane, N-butyl-3-amino-2-méthylpropyltriméthoxysilane, N-phényl-gamma-aminopropyltriméthoxysilane, N-benzyl-gamma-aminopropyltriméthoxysilane.

10. Composition adhésive de contact selon la revendication 9, dans laquelle l'aminosilane est présent en une quantité de 0,1 à 5 % en poids, de préférence de 0,5 à 3 % en poids, et plus préférablement de 1,0 à 2,5 en poids, sur la base du poids total de la composition adhésive de contact.

11. Composition adhésive de contact selon l'une quelconque des revendications précédentes, dans laquelle la résine tackifiante est choisie parmi résine de pétrole aliphatique, résine de pétrole cyclique, résine de pétrole aromatique, résine de gomme, ester de colophane, résine terpénique synthétique, résine terpénique naturelle et combinaisons de ceux-ci.

12. Composition adhésive de contact selon l'une quelconque des revendications précédentes, dans laquelle le rapport en poids du premier caoutchouc chloroprène au second caoutchouc chloroprène n'est pas inférieur à 2,0, de préférence pas inférieur à 3,0, et plus préférablement pas inférieur à 3,5.

13. Procédé permettant de préparer une composition adhésive de contact selon l'une quelconque des revendications 1 à 12, comprenant les étapes consistant à :
(1) dissoudre un caoutchouc chloroprène dans un solvant pour obtenir un mélange homogène ;
(2) ajouter facultativement un promoteur d'adhérence, une résine tackifiante et un additif dans le mélange ; et
(3) obtenir la composition adhésive de contact,
dans lequel les étapes sont de préférence conduites dans des conditions ambiantes.

14. Procédé permettant de produire des substrats collés comprenant l'application d'au moins une composition selon l'une quelconque des revendications 1 à 12 sur au moins une surface d'au moins un substrat et le collage ultérieur du substrat appliqué à au moins un substrat supplémentaire.

15. Utilisation de la composition adhésive de contact selon l'une quelconque des revendications 1 à 12 dans la fabrication de chaussures ou de meubles.
